# EUROPÄISCHE PATENTSCHRIFT

(11) **EP 2 112 065 B1**
(45) Veröffentlichungstag und Bekanntmachung des Hinweises auf die Patenterteilung: **18.06.2014**
(21) Anmeldenummer: 09001353.3
(22) Anmeldetag: 30.01.2009
(51) Int. Cl.: B64C 39/02, B64D 25/12, B64D 45/04, B64D 17/80, B64D 25/00

(54) **Verfahren zur Rettung eines bemannten oder unbemannten Fluggeräts, insbesondere einer Drohne**
Method for rescuing an unmanned or manned airplane, in particular a drone
Procédé de sauvetage d'un aéronef avec ou sans pilote, notamment d'un drone

(30) Priorität: 24.04.2008 DE 102008020534
(43) Veröffentlichungstag der Anmeldung: 28.10.2009
(73) Patentinhaber: Cassidian Airborne Solutions GmbH, 28309 Bremen (DE)
(72) Erfinder: Martinkat, Norbert, 27339 Riede (DE)
(74) Vertreter: Greif, Thomas

(56) Entgegenhaltungen:
- DE-A1- 4 239 638
- DE-B- 1 232 855
- US-A- 4 060 793
- US-A- 5 836 544
- US-A1- 2003 057 327

## Beschreibung

Die Erfindung betrifft ein Verfahren zur Rettung eines bemannten oder unbemannten Fluggeräts, insbesondere eine Drohne, mit einer Vorrichtung, die zusätzlich zum regulären Flugrechner eine autarke Notauslöseeinheit mit einer Einrichtung zur Bestimmung der Sinkgeschwindigkeit des Fluggeräts und einer Steuereinrichtung enthält, die beim Überschreiten einer vorgegebenen Sinkgeschwindigkeit automatisch eine Landung auslöst.

In der DE 100 26 469 C1 ist ein Verfahren zur Ausbringung eines Fallschirms an einer Drohne beschrieben. Bei diesem Verfahren umfasst die Steuerungsanlage der Drohne mindestens einen Flugführungsrechner, ein Fallschirmsystem mit Fallschirm, ein Energieversorgungssystem, ein Antriebssystem sowie ein Stellantriebssystem, wobei keines dieser Systeme der Drohne dupliziert ist.

Die US 5 836 544 A offenbart ein Verfahren nach dem Oberbegriff des Anspruchs 1 sowie ein Notfall-Landesystem für Fluggeräte mit Rotoren, beispielsweise Helikopter. Das System sieht mindestens eine Vorrichtung mit einem Fallschirm vor, welche den Fallschirm im Falle einer extremen Notsituation auslöst. Die Auslösung kann entweder manuell oder automatisch erfolgen, wenn das Fluggerät eine festgelegte Höhe oder eine ungewöhnliche Sinkgeschwindigkeit erreicht. Das System kann weiterhin in Kombination mit einem Airbag genutzt werden, der an der Unterseite des Fluggerätes angebracht ist. Bemannte oder unbemannte Fluggeräte haben zivile oder militärische Aufgaben zu erfüllen. Diese kommen beispielsweise aus den Bereichen der Meteorologie oder der militärischen Aufklärung.

Nach Abschluss ihrer Aufgaben landen diese Fluggeräte in einem gewünschten Zielgebiet.

Ist dies nicht möglich, weil zum Beispiel das Fluggerät defekt ist, müssen Maßnahmen ergriffen werden, um einen unkontrollierten Absturz und damit eine mögliche Schädigung Unbeteiligter sowie die Zerstörung des Fluggeräts am Boden zu verhindern.

Aufgabe der Erfindung ist es, ein Verfahren zu schaffen, das eine Zerstörung des Fluggeräts durch einen unkontrollierten Absturz verhindert.

Die Aufgabe wird erfindungsgemäß durch ein Verfahren nach Anspruch 1 gelöst.

Dieses Verfahren hat den Vorteil, dass in einer Situation, in der die Landung durch die Notauslöseeinheit eingeleitet werden muss, diese Einheit bereits scharf geschaltet ist und nur noch das Auslösesignal abgegeben werden muss, um die Landung einzuleiten. Dieses Verfahren steigert die Flugsicherheit, weil dadurch in einer Notsituation Zeit beispielsweise für die Übermittlung eines entsprechenden Signals von der Bodenstation per Funk eingespart wird.

Nach einer weiteren Ausführungsform des Verfahrens wird die Notauslöseeinheit automatisch scharf geschaltet, wenn das Fluggerät die vorgegebene Flughöhe über seinem jeweiligen Startplatz überschreitet. Dieses Verfahren hat den Vorteil, dass im weiteren Verlauf des Flugs kein Aktivierungskriterium der Notauslöseeinheit mehr bestimmt werden muss.

In einer weiteren Ausführungsform des Verfahrens wird vor dem Start des Fluggeräts die Höhe des Startplatzes des Fluggeräts barometrisch bestimmt. Im weiteren Verlauf des Flugs wird mit Hilfe einer barometrischen Einrichtung kontinuierlich die jeweils aktuelle Flughöhe bestimmt und aus diesen Werten die aktuelle Sinkgeschwindigkeit des Fluggeräts berechnet.

Eine weitere Ausführungsform des Verfahrens sieht vor, dass beim Überschreiten der vorgegebenen Sinkgeschwindigkeit der Motor ausgeschaltet und ein Fallschirm ausgelöst wird.

Eine weitere Ausführungsform des Verfahrens sieht vor, dass beim Überschreiten der vorgegebenen Sinkgeschwindigkeit eine Lenkfallschirmlandung mit einem zusätzlichen autarken Navigationssystem erfolgt.

Nachfolgend wir die Erfindung anhand eines vereinfacht dargestellten Ausführungsbeispiels beschrieben.

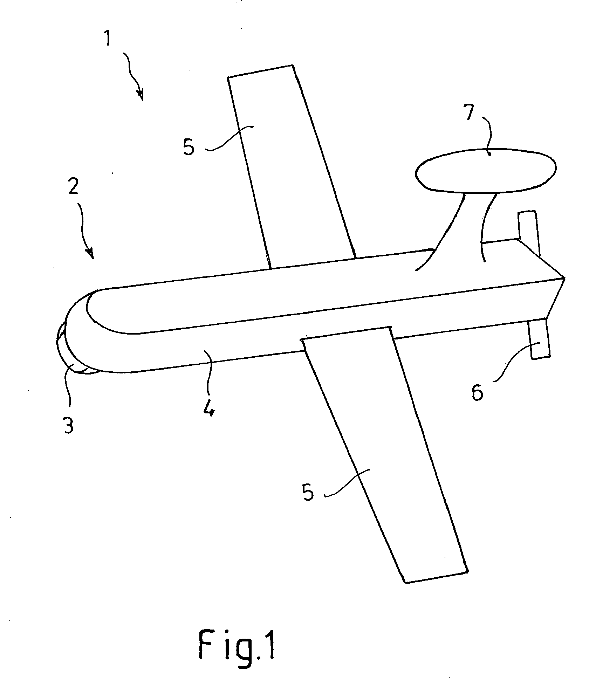

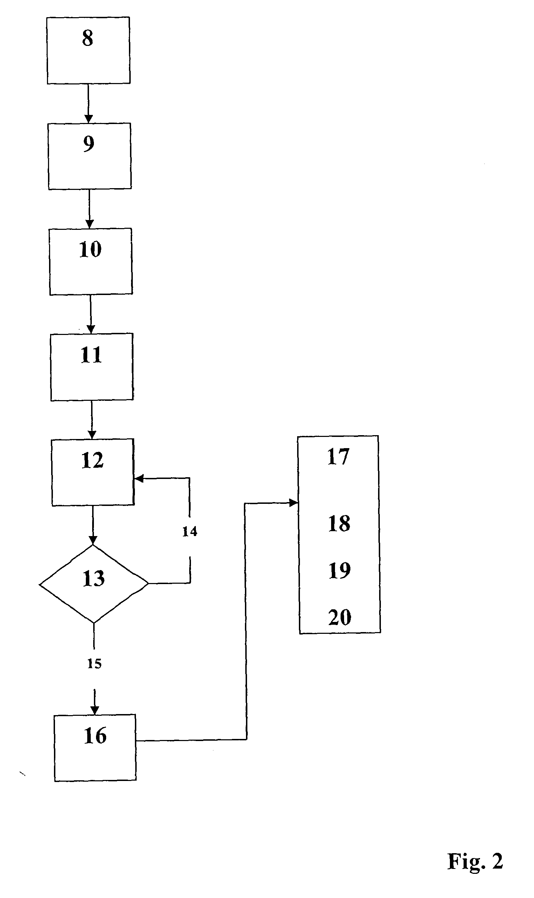

Dabei zeigt Figur 1 eine Drohne als unbemanntes Fluggerät und Figur 2 das Flussdiagramm der Notauslöseeinheit der Drohne.

Die Figurenbeschreibung bezieht sich auf eine Drohne als unbemanntes Fluggerät 1, wie es beispielhaft in Figur 1 dargestellt ist. Ein Verfahren zur Rettung einer Drohne 1 ist das bevorzugte Ausführungsbeispiel der Erfindung. Unterhalb des Bugs 2 der

Drohne 1 befindet sich eine Kamera 3. Etwa in der Mitte der Drohne 1 sind die Flügel 5 angebracht. Der Motor 6 befindet sich im Heck der Drohne 1. An dem hinteren Drittel der Drohne 1 hinter den Flügeln 5 ist eine Antenne 7 befestigt.

Das Fluggerät weist zusätzlich zum regulären Flugrechner eine autarke Notauslöseeinheit mit einer Einrichtung zur Bestimmung der Sinkgeschwindigkeit des Fluggeräts auf. Ferner enthält das Fluggerät eine Steuereinrichtung, die beim Überschreiten 15 des Grenzwertes der Sinkgeschwindigkeit automatisch eine Systemauslösung 16 einleitet. Der Grenzwert der Sinkgeschwindigkeit wird vor dem Start in die Steuereinrichtung eingegeben.

Figur 2 stellt das Flussdiagramm der Notauslöseeinheit des Fluggeräts dar. Auf der linken Seite der Figur 2 ist unter den Positionen 8 bis 16 der zugehörige Steuerungsablauf dargestellt. Auf der rechten Seite ist auf den Positionen 17 bis 20 der Bereich der nachgeordneten Vorrichtungen dargestellt, die im Fall einer Notauslösung eine Landung ermöglichen.

Am Startplatz wird die Drohne und das Auslösesystem eingeschaltet 8. Die jeweilige Höhe des Startplatzes wird mittels einer barometrischen Einrichtung vor dem Start 10 des Fluggeräts gemessen. Zusätzlich wird vor dem Start 10 ein Grenzwert der Sinkgeschwindigkeit in die Steuereinrichtung eingegeben. Außerdem wird vor dem jeweiligen Start 10 des Fluggeräts eine bestimmte Flughöhe über dem jeweiligen Startplatz in die Steuereinrichtung der Notauslöseeinheit eingegeben 9. Danach erfolgt der Start des Fluggeräts 10. Überschreitet das Fluggerät die eingegebene Flughöhe, wird eine Notauslöseeinheit scharf geschaltet 11. Im weiteren Verlauf des Flugs wird die aktuelle Flughöhe des Fluggeräts mittels einer barometrischen Einrichtung kontinuierlich bestimmt und aus diesen Werten die aktuelle Sinkgeschwindigkeit berechnet 12. Die aktuelle Sinkgeschwindigkeit wird mit der eingegebenen maximalen Sinkgeschwindigkeit verglichen 13. Wird die vor dem Start 10 eingegebene Sinkgeschwindigkeit nicht überschritten, setzt das Fluggerät seinen Flug fort 14.

Wird eine Überschreitung des Grenzwerts der Sinkgeschwindigkeit festgestellt 15, so wird durch die Steuereinrichtung der autarken Notauslöseeinheit automatisch eine Landung ausgelöst 17. Diese Landung wird bevorzugt mit dem an Bord befindlichen Fallschirm durchgeführt.

Alternativ zu diesem Verfahren gibt es die folgenden zwei Möglichkeiten, eine kontrollierte Landung des Fluggeräts durchzuführen:
Beim Überschreiten 15 der vorgegebenen Sinkgeschwindigkeit wird der Motor ausgeschaltet und ein Fallschirm ausgelöst 18. Ferner besteht die Möglichkeit, beim Überschreiten der vorgegebenen Sinkgeschwindigkeit eine Lenkfallschirmlandung mit einem zusätzlichen autarken Navigationssystem durchzuführen 19.

Bevorzugt weist das Fluggerät eine Bergefolgeschaltung 20 auf. Die Bergefolgeschaltung wird nur ausgelöst, wenn während eines Flugs ein Systemfehler im Fluggerät auftritt und registriert wird. Während eines Flugs erhält die Bergefolgeschaltung vom Flugrechner regelmäßig durch ein Signal eine Information darüber, ob ein Systemfehler an Bord des Fluggeräts registriert wurde. Wurde kein Systemfehler an Bord des Fluggeräts registriert, setzt das Fluggerät seinen Flug fort. Wurde ein Systemfehler registriert, kommt es zur Auslösung der Bergefolgeschaltung.

Im diesem Fall hat die Bergefolgeschaltung die folgenden Aufgaben einzuleiten: Abschalten des Motors, Öffnen der Fallschirmraumtür und damit zwangsweises Auswerfen des Fallschirms, Aufblasen von Airbags. Dabei ist es möglich, dass die Bergefolgeschaltung indirekt durch die Notauslöseeinheit ausgelöst wird. Schaltet die Notauslöseeinheit den Motor aus, so kann dies von der Bergefolgeschaltung als Systemfehler mit entsprechenden Folgen interpretiert werden.

## Patentansprüche

1. Verfahren zur Rettung eines bemannten oder unbemannten Fluggeräts, insbesondere einer Drohne (1), mit einer Vorrichtung, die zusätzlich zum regulären Flugrechner eine autarke Notauslöseeinheit mit einer Einrichtung zur Bestimmung der Sinkgeschwindigkeit des Fluggeräts und einer Steuereinrichtung enthält, wobei ein Grenzwert der vorgegebenen Sinkgeschwindigkeit vor dem Start (10) in die Steuereinrichtung eingegeben wird und automatisch eine Landung von der Steuereinheit der autarken Notauslöseeinheit ausgelöst wird (16), wenn der Grenzwert dervorgegebenen Sinkgeschwindigkeit überschritten wird (15),
**dadurch gekennzeichnet, dass** eine Flughöhe oberhalb der Höhe des jeweiligen Startplatzes vor dem jeweiligen Start (10) in die Steuereinrichtung der Notauslöseeinheit eingegeben wird (9), bei deren Überschreiten die Notauslöseeinheit scharf geschaltet wird (11).

2. Verfahren zur Rettung eines bemannten oder unbemannten Fluggeräts, insbesondere einer Drohne (1), nach Anspruch 1, **dadurch gekennzeichnet, dass** die Notauslöseeinheit scharf geschaltet wird (11), wenn die vorgegebene Flughöhe nach dem Start überschritten wird.

3. Verfahren zur Rettung eines bemannten oder unbemannten Fluggeräts, insbesondere einer Drohne (1), nach Anspruch 1 oder 2, **dadurch gekennzeichnet, dass** die aktuelle Flughöhe des Fluggeräts kontinuierlich mittels einer barometrischen Einrichtung bestimmt wird und dass aus diesen Werten die aktuelle Sinkgeschwindigkeit kontinuierlich berechnet wird (12).

4. Verfahren zur Rettung eines bemannten oder unbemannten Fluggeräts, insbesondere einer Drohne (1), nach einem der Ansprüche 1 bis 3, **dadurch gekennzeichnet, dass** beim Überschreiten der vorgegebenen Sinkgeschwindigkeit (15) der Motor (6) ausgeschaltet und ein Fallschirm ausgelöst wird (18).

5. Verfahren zur Rettung eines bemannten oder unbemannten Fluggeräts, insbesondere einer Drohne (1), nach einem der Ansprüche 1 bis 4, **dadurch gekennzeichnet, dass** beim Überschreiten der vorgegebenen Sinkgeschwindigkeit (15) eine Lenkfallschirmlandung mit einem zusätzlichen autarken Navigationssystem erfolgt (19).

## Claims

1. Method for rescuing an manned or unmanned aircraft, in particular a drone (1), having a device which, in addition to the usual flight computer, contains an autonomous emergency release unit having an apparatus for determining the dropping speed of the aircraft and control apparatus, wherein a limiting value of the predefined dropping speed is input into the control apparatus before the start (10) and landing is automatically triggered (16) by the control unit of the autonomous emergency release unit if the limiting value of the predefined dropping speed is exceeded (15),
**characterized in that** a flying height above the height of the respective starting location before the respective start (10) is input into the control apparatus of the emergency release unit (9) at the exceeding of which the emergency release unit is switched on suddenly (11).

2. Method for rescuing a manned or unmanned aircraft, in particular a drone (11), according to Claim 1, **characterized in that** the emergency release unit is switched on suddenly (11) if the predefined flying height is exceeded after the start.

3. Method for rescuing a manned or unmanned aircraft, in particular a drone (1), according to Claim 1 or 2, **characterized in that** the current flying height of the aircraft is determined continuously by means of a barometric apparatus, and **in that** the current dropping speed is continuously calculated (12) on the basis of these values.

4. Method for rescuing a manned or unmanned aircraft, in particular a drone (1), according to one of Claims 1 to 3, **characterized in that** when the predefined dropping speed (15) is exceeded the engine (6) is switched off and a parachute is released (18).

5. Method for rescuing a manned or unmanned aircraft, in particular a drone (1), according to one of Claims 1 to 4, **characterized in that** when the predefined dropping speed (15) is exceeded a steerable parachute landing is carried out (19) with an additional autonomous navigation system.

## Revendications

1. Procédé de sauvetage d'un aéronef avec ou sans pilote, en particulier d'un drone (1), à l'aide d'un dispositif qui en plus du calculateur de vol normal contient une unité autonome de déclenchement d'urgence dotée d'un dispositif de détermination de la vitesse de chute de l'aéronef et d'un dispositif de commande,
une valeur limite prédéterminée de la vitesse de chute étant introduite dans le dispositif de commande avant l'envol (10) et un atterrissage étant déclenché automatiquement par l'unité de commande de l'unité autonome de déclenchement d'urgence (16) si la vitesse limite de la vitesse de chute prédéterminée est dépassée (15),
**caractérisé en ce que**
l'altitude de vol située au-dessus de l'altitude de l'emplacement de décollage particulier est introduite dans le dispositif de commande de l'unité de déclenchement d'urgence avant le décollage (10), l'unité de déclenchement d'urgence (9) étant activée lorsqu'elle est dépassée (11).

2. Procédé de sauvetage d'un aéronef avec ou sans pilote, en particulier d'un drone (1) selon la revendication 1, **caractérisé en ce que** l'unité de déclenchement d'urgence est activée (11) si l'altitude de vol prédéterminée est dépassée après le décollage.

3. Procédé de sauvetage d'un aéronef avec ou sans pilote, en particulier d'un drone (1) selon les revendications 1 ou 2, **caractérisé en ce que** l'altitude de vol en cours de l'aéronef est déterminée en continu au moyen d'un dispositif barométrique et **en ce que** la vitesse effective de chute est calculée en permanence à partir de ces valeurs (12).

4. Procédé de sauvetage d'un aéronef avec ou sans pilote, en particulier d'un drone (1) selon l'une des revendications 1 à 3, **caractérisé en ce que** lorsque la vitesse de chute prédéterminée (15) est dépassée, le moteur (6) est débranché et un parachute (18) est ouvert.

5. Procédé de sauvetage d'un aéronef avec ou sans pilote, en particulier d'un drone (1) selon l'une des revendications 1 à 4, **caractérisé en ce que** lorsque la vitesse de chute prédéterminée (15) est dépassée, un atterrissage à l'aide d'un parachute dirigeable s'effectue (19) à l'aide d'un système autonome de navigation supplémentaire.
